# EUROPÄISCHE PATENTSCHRIFT

(11) **EP 3 913 396 B1**
(45) Veröffentlichungstag und Bekanntmachung des Hinweises auf die Patenterteilung: **11.11.2026**
(21) Anmeldenummer: 21181902.4
(22) Anmeldetag: 11.02.2020
(51) Int. Cl.: G01S 11/02, G01S 3/46

(54) **LAUFZEITMESSUNG BASIEREND AUF FREQUENZUMSCHALTUNG**
PROPAGATION TIME MEASUREMENT BASED ON FREQUENCY SWITCHING
MESURE DU TEMPS DE PROPAGATION EN FONCTION DE LA COMMUTATION DE FRÉQUENCE

(30) Priorität: 13.02.2019 DE 202019100829 U; 01.04.2019 WO PCT/EP2019/058153
(43) Veröffentlichungstag der Anmeldung: 24.11.2021
(62) Dokumentnummer(n) der früheren Anmeldung(en) nach Art. 76 EPÜ: 20703256.6 / 3 714 287
(73) Patentinhaber: Lambda: 4 Entwicklungen GmbH, 22299 Hamburg (DE)
(72) Erfinder: Reimann, Rönne, 22769 Hamburg (DE)
(74) Vertreter: Raffay & Fleck

(56) Entgegenhaltungen:
- WO-A1-2018/059782
- US-A- 4 087 816
- US-A1- 2010 207 820

## Beschreibung

Die Erfindung befasst sich mit der Synchronisierung, Entfernungsmessung und anderen Messungen in Funksystemen.

Aus dem Stand der Technik sind zahlreiche Verfahren zur Synchronisierung und Entfernungsmessung bekannt.

Auch ist es bekannt, in Funksystemen PLLs zur frequenzvariablen Erzeugung von Signalen zu verwenden. Ebenfalls ist es bekannt, dass PLLs von einer ersten Frequenz zu einer zweiten Frequenz umgestimmt werden können.

Auch ist die phasensynchrone Umschaltung zwischen zwei PLLs aus der US 6,240,152 bekannt. Ebenfalls ist es bekannt, die Phasendifferenz zwischen zwei Signalen zu bestimmen.

Auch ist es aus der US 4,087,816 bekannt, ein bodenbasiertes globales Positionsbestimmungssystem aus mehreren über hochgenaue Uhren zeitsynchronisierten Sendestationen aufzubauen, die jeweils im kHz Bereich dauerhaft eine erste Grundfrequenz mit hoher Frequenzstabilität abstrahlen und wiederholt zwischenzeitlich auf die Abstrahlung einer leicht veränderten zweiten Frequenz phasenkohärent wechseln. Ein entsprechender Empfänger kann in einem solchen System seine Position mit einer Genauigkeit von bis zu 500m bestimmen, dies ist genauer als ohne den Wechsel zu einer leicht veränderten Frequenz möglich wäre. Aufgabe der Erfindung ist es, bekannte Verfahren zu vereinfachen und eine einfachere und schnellere und/oder genauere Messung zu ermöglichen. Eine schnellere Messung kann zur Steigerung der Genauigkeit beispielsweise durch mehrfache Wiederholung beitragen. Eine schnellere Messung trägt aber zur Genauigkeit in nicht-statischen Anordnungen auch dadurch bei, dass Änderungen der Anordnungen nur innerhalb eines kürzeren Zeitfensters Einfluss auf die Messung nehmen. Dies ist besonders bei kleineren Wellenlängen von besonderer Bedeutung, insbesondere wenn die Bewegung während der Dauer der Messung einen nicht zu vernachlässigenden Anteil der Wellenläge erreicht.

Die Erfindung macht sich die Erkenntnis darüber zu Nutze, dass durch Umschalten zwischen einer ersten Frequenz (f1) und mindestens einer ersten weiteren Frequenz (f1 w.n, n ist immer eine natürliche ganze Zahl größer O) ein Zeitpunkt im Signalverlauf genauer bestimmen lässt, als dies mit bisherigen Mitteln und Verfahren möglich ist. Durch die Verwendung mehrerer weiterer Frequenzen können mehrere solche Zeitpunkte bestimmt werden und kann nicht nur die von der Wellenlänge abhängige Mehrdeutigkeit der Messung reduziert oder vermieden werden, sondern auch eine höhere Genauigkeit erreicht werden. Dies ist gerade bei hohen Frequenzen im MHz Bereich und/oder bei Entfernungen zwischen den Objekten von unter 100kmm, insbesondere unter 10km, und darüber hinaus zur Begrenzung des Aufwandes der Signalerzeugung und Messung äußerst hilfreich und ressourcenschonend. Auch ermöglicht es die Abstandsbestimmung zwischen einem ersten und zweiten Objekt, insbesondere allein durch Signale des ersten und zweiten Objekts. Insbesondere wird ein Abstand der Objekte mit einer Genauigkeit von besser als 50 cm, meist sogar besser als 10 cm, bestimmt, insbesondere bei Abständen bis 100km, insbesondere bis 10km. Für höhere Entfernungen stellen die geltenden Strahlungsgrenzwerte im MHz- und GHz-Bereich in der Praxis regulatorische Hindernisse dar. Dabei können bekannte Übertragungssysteme verwendet werden, sofern sie in der Lage sind, einen Frequenzwechsel unter Kenntnis oder Bestimmung der Phasenlage durchzuführen. Insbesondere sind die verwendeten Signale solche, die, insbesondere zeitgleich, auch zur digitalen Datenübertragung von Daten, insbesondere Nutzdaten, insbesondere in Form von Chips und/oder Symbolen, verwendet werden. Insbesondere werden die Signale eines solchen Übertragungssystems für die Erfindung genutzt, insbesondere die Signale eines Bluetoothsystems. Insbesondere sind die Objekte Transreceiver eines digitalen Datenübertragungssystems, insbesondere arbeitend mit QAM.

Gelöst wird die Aufgabe unter anderem durch ein Verfahren gemäß Anspruch 1. Weitere Ausbildungen ergeben sich aus den abhängigen Ansprüchen.

Es kann mehrere erste weitere Signale (Sw1.n) und mehrere erste weitere Frequenzen (f1w.n) geben.

Die ersten Phasenbeziehungen zwischen aufeinanderfolgenden ersten weiteren Signalen S1w.m-1 und S1w.m mit m aus n werden insbesondere mit phi1.m bezeichnet.

Der Phasenverlauf des ersten Signals (S1) weist zu dem ersten weiteren Phasenverlauf des ersten weiteren Signals (S1w.1) am ersten Objekt die erste Phasenbeziehung (phi1.1) zu einem ersten Wechselzeitpunkt (Umschaltzeitpunkt) auf. Die gegebenenfalls mehreren ersten weiteren Signale (S1w.n, n jeweils ganze Zahl größer gleich 1) weisen untereinander und/oder zum ersten Signal (S1) am ersten Objekt eine jeweilige erste Phasenbeziehung (phi1 .n) auf. Dabei muss weder das erste noch ein erstes weiteres Signal zum Wechselzeitpunkt (Umschaltzeitpunkt) abgestrahlt werden. Es kann zum Wechselzeitpunkt (Umschaltzeitpunkt) auch eine Unterbrechung des Abstrahlens vorliegen. Erste Signale und/oder erste weitere Signale weisen insbesondere jeweils eine konstante Frequenz auf. So können das erste Signal am ersten Objekt in die Zukunft extrapoliert und das erste weitere Signal am ersten Objekt in die Vergangenheit extrapoliert die erste Phasenbeziehung am Wechselzeitpunkt (Umschaltzeitpunkt) aufweisen. Dies kann beispielsweise notwendig sein, wenn nur eine PLL zur Erzeugung der Signale verwendet wird und diese über ein gewisses Zeitfenster von der ersten Frequenz über Zwischenfrequenzen bis zur ersten weiteren Frequenz umgestimmt werden muss. Die Zwischenfrequenzen werden dann insbesondere nicht als Teil des ersten und nicht als Teil des ersten weiteren Signals betrachtet. Am Wechselzeitpunkt (Umschaltzeitpunkt) wird dann weder das erste noch das erste weitere Signal abgestrahlt. Es mag ein Zwischensignal abgestrahlt werden oder nicht. Zum Beispiel kann die erste Phasenbeziehung zwischen erstem Signal am ersten Objekt und erstem weiteren Signal am ersten Objekt durch Extrapolation des ersten Signals am ersten Objekt und des ersten weiteren Signals am ersten Objekt jeweils bis zum Wechselzeitpunkt (Umschaltzeitpunkt) bestimmt und/oder gemessen werden. Ist das Verhalten der genutzten Hardware bekannt, ist es in der Regel entbehrlich, die ersten Phasenbeziehungen am ersten Objekt zu messen. Dies gilt insbesondere, wenn sich durch Ansteuerung der genutzten Hardware zum Beispiel ein erstes und ein erstes weiteres Signal mit einer vorbestimmten Phasenbeziehung am ersten Objekt zu einem Wechselzeitpunkt (Umschaltzeitpunkt) erzeugen lassen.

Insbesondere durch Extrapolation des Phasenverlauf des empfangen ersten Signals am zweiten Objekt in die Zukunft und Extrapolation des Phasenverlauf des empfangene ersten weiteren Signals am zweiten Objekt in die Vergangenheit lässt sich, insbesondere bei einem zeitlichen Abstand zwischen erstem und erstem weiteren Signal, auch ein erster virtueller Frequenzwechselzeitpunkt bestimmen, bei dem die extrapolierten Phasenverläufe am zweiten Objekt die erste Phasenbeziehung (phi1.1) aufweisen. Der/ein Zeitpunkt, bei dem dies der Fall wäre, kann als virtueller Frequenzwechselzeitpunkt zur Synchronisation genutzt werden. Er ist mit sehr hoher Genauigkeit bestimmbar und ermöglicht so eine Synchronisationsgenauigkeit, die mit bisherigen Verfahren, insbesondere unter Nutzung einfacher und/oder günstiger Hardware, nicht zu erreichen ist. Entsprechend kann zwischen aufeinanderfolgenden ersten weiteren Signalen unterschieden werden. Es kann dabei eine Synchronisationsgenauigkeit von nur wenigen Nanosekunden erreicht werden.

Insbesondere werden das erste Signal (S1) und das mindestens eine erste weitere Signal (S1w.n) mittels einer einzigen PLL erzeugt oder durch zwei PLLs, zwischen denen zum Wechseln der Frequenz umgeschaltet wird, erzeugt. Dabei können die Signale ohne Pause dazwischen oder mit einer Pause dazwischen erzeugt und/oder abgestrahlt werden. Auch kann, bevorzugt, ein abrupter Wechsel und/oder ein Wechsel ohne Nutzung von Zwischenfrequenzen zwischen den Frequenzen durchgeführt werden oder die Frequenz mehr oder weniger kontinuierlich und/oder unter Nutzung von Zwischenfrequenzen von der ersten zur zweiten gewechselt werden. Bei einem Wechsel unter Erzeugung von Zwischenfrequenzen können Zwischenfrequenzen auch abgestrahlt werden oder deren Abstrahlung teilweise oder vollständig unterbunden werden.

Bevorzugt liegt zwischen dem Ende des ersten Signals (S1) mit der ersten Frequenz und dem Beginn des ersten weiteren Signals (S1w) mit der ersten weiteren Frequenz eine Zeitspanne von von maximal 500 *µ*s, insbesondere maximal 300 *µ*s, insbesondere maximal 30 *µ*s, insbesondere maximal 1 *µ*s, und/oder besonders bevorzugt maximal fünf, insbesondere maximal zwei, Perioden des ersten oder des ersten weiteren Signals .

Bei Verwendung von Zwischenfrequenzen zeichnet sich der Beginn des ersten weiteren Signals insbesondere dadurch aus, dass die Frequenz des zweiten weiteren Signals konstant und/oder stabil ist, insbesondere für mindestens eine ms, insbesondere mindestens 5 ms, und/oder mindestens eine, insbesondere mindestens zwei Perioden des ersten weiteren Signals.

Bevorzugt wird, dass sich die erste Frequenz von der ersten weiteren Frequenz um eine erste Differenz (df1) unterscheidet, wobei insbesondere die erste Differenz (df1) einen Wert von mindestens 0,02 ‰, insbesondere mindestens 0,04 ‰, der Frequenz des ersten oder ersten weiteren Signals und/oder von mindestens 50 kHz, insbesondere mindestens 100 kHz, und/oder von maximal 5%, insbesondere maximal 4,2%, der Frequenz des ersten oder ersten weiteren Signals und/oder von maximal 120 MHz, insbesondere maximal 100 MHz, aufweist und/oder wobei die erste Differenz (df1) einen Wert im Bereich von
100kHz multipliziert mit der einheitslosen Zahl der durch die durchgeführte Anzahl von Abtastungen des ersten Signals (S1) oder ersten weiteren Signals (S1w) erreichten Phasenauflösung in Grad
   bis
80MHz multipliziert mit der einheitslosen Zahl der durch die durchgeführte Anzahl von Abtastungen des ersten Signals (S1) oder ersten weiteren Signals (S2) erreichten Phasenauflösung
aufweist.

Unter der Phasenauflösung ist insbesondere die Genauigkeit gemessen in Grad aber ohne die Einheit Grad der Messung der Phasenlage, auf Basis der durchgeführten, in der Regel mehreren Messungen, zu verstehen. Dabei wird die Phasenauflösung mit Steigerung der Anzahl der Messungen besser werden und einen geringeren Wert annehmen. In der Praxis ist meist mit Phasenauflösungen von 0,1° bis 10°, insbesondere von 0,5° bis 3° zu rechnen. Zur Berechnung des indizierten Frequenzunterschiedsbereichs ist die Einheit ° zu entfernen.

Bevorzugt werden ein erster virtueller Frequenzwechselzeitpunkt zwischen der ersten Frequenz (f1) und einer ersten ersten weiteren Frequenz und mindestens ein weiterer erster virtueller Frequenzwechselzeitpunkt zwischen mindestens zwei ersten weiteren Frequenzen (F1w.n) bestimmt, oder werden mindestens zwei virtueller Frequenzwechselzeitpunkte zwischen der ersten Frequenz (f1) und mindestens zwei ersten weiteren Frequenzen (F1w.n) bestimmt, wobei zwischen aufeinanderfolgenden ersten und/oder ersten weiteren Signalen am ersten Objekt erste Phasenbeziehungen (phi1.n) bestehen, wobei die ersten Phasenbeziehungen (phi1.n) am ersten Objekt vorbestimmt und/oder bekannt sind und/oder ermittelt werden,
wobei aus einem an dem zweiten Objekt empfangen Phasenverlauf des am zweiten Objekt empfangenen ersten Signals (S1) und den Phasenverläufen der am zweiten Objekt empfangenen mindestens zwei ersten weiteren Signale (S1w.n) die mindestens zwei ersten virtuellen Frequenzwechselzeitpunkte (t1.n) bestimmt werden, jeweils als ein Zeitpunkt, an dem die Phasenbeziehung zwischen den interpolierten und/oder empfangenen Phasenlagen zweier, insbesondere aufeinander folgender, Signale aus
dem ersten und den mindestens zwei ersten weiteren Signale (S1, S1w.n) am zweiten Objekt der jeweiligen ersten Phasenbeziehung (phi1.n) zwischen diesen Signalen am ersten Objekt entspricht.

Bevorzugt weisen das erste Objekt und das zweite Objekt einen Abstand von von 100km und weniger, insbesondere 10km und weniger, insbesondere von 1km und weniger, auf.

Bevorzugt liegen die erste und/oder die weiteren Frequenzen, zum Beispiel die erste(n) weitere(n) Frequenz(en) oberhalb 1MHz, insbesondere oberhalb von 50MHz, besonders bevorzugt oberhalb von 250MHz, insbesondere im Bereich bis 50 GHz.

Insbesondere sind die ersten und/oder ersten weiteren Signale Signale, die, insbesondere zeitgleich, zur digitalen Datenübertragung genutzt werden, insbesondere mittels der Übertragung von Chips und/oder Symbolen, insbesondere Signale eines digitalen, insbesondere QAM basierten, Daten-übertragungssystem, insbesondere eines Chip- und/oder Symbolsynchronisierten digitalen Datenübertragungssystems.

Bevorzugt wird mindestens einer, insbesondere mindestens zwei der virtuellen Frequenzwechselzeitpunkte zur Synchronisation des zweiten Objekts (Empfänger) und/oder des am zweiten Objekt (Empfänger) empfangenen ersten und/oder ersten weiteren Signals verwendet wird, insbesondere zur Synchronisation auf ein vom ersten Objekt (Sender) abgestrahltes Signal, insbesondere das erste Signal (S1) und/oder ein erstes weiteres Signal (S1w.n) und/oder auf einen ersten Wechselzeitpunkt und/oder einen Zeitgeber des ersten Objekts und/oder mit dem ersten Objekt synchronisierten Zeitgeber und/oder zur Synchronisation auf ein vom zweiten Objekt abgestrahltes Signal, und/oder einen Zeitgeber des zweiten Objekts und/oder mit dem zweiten Objekt synchronisierten Zeitgeber.

Die Synchronisation beispielswiese auf ein erstes oder erstes weiteres Signal des ersten Objekts kann insbesondere so erfolgen, dass des zweite Objekt feststellt, zu welcher Zeit relativ zu einem Zeitgeber des zweiten Objekts oder eines mit dem zweiten Objekt synchronisierten Zeitgeber das erste oder erste weitere Signal am ersten Objekt abgestrahlt wurde.

Die Synchronisation beispielswiese auf einen ersten Wechselzeitpunkt am ersten Objekt kann insbesondere so erfolgen, dass das zweite Objekt feststellt, zu welcher Zeit relativ zu einem Zeitgeber des zweiten Objekts oder eines mit dem zweiten Objekt synchronisierten Zeitgeber der Wechselzeitpunkt am ersten Objekt stattfand und/oder lag.

Mit Vorteil weist ein erster Wechselzeitpunkt (Umschaltzeitpunkt), an dem die Phasenbeziehung zwischen der Phasenlage des ersten Signals (S1), gegebenenfalls in die Zukunft extrapoliert, und der Phasenlage des ersten ersten weiteren Signals (S1w.1), gegebenenfalls in die Vergangenheit extrapoliert, am ersten Objekt (Sender) der ersten ersten Phasenbeziehung (phi1.1) entspricht, eine vorbestimmte und/oder bestimmbare zeitliche Beziehung relativ zu einem vom ersten Objekt (Sender) abgestrahlten und/oder empfangenen Signal auf. Dadurch lässt sich beispielsweise eine Signalrundlaufzeit bestimmen und/oder besonders einfach und zuverlässig eine Synchronisation realisieren.

Am zweiten Objekt wird eine erste Zeitdifferenz (dt1) zwischen einem nach einem der vorstehenden Ansprüche bestimmten ersten virtuellen Frequenzwechselzeitpunkt (t1.n) und dem Bezugszeitpunkt (t1') vorbestimmt und/oder bekannt und/oder wird diese gemessen und/oder ermittelt. Am ersten Objekt wird eine zweite Zeitdifferenz (dt2) zwischen einem ersten Wechselzeitpunkt (Umschaltzeitpunkt), an dem die Phasenbeziehung zwischen der Phasenlage des ersten Signals (S1) und der Phasenlage des ersten ersten weiteren Signals (S1w.n) am ersten Objekt der ersten Phasenbeziehung (phi1.1) entspricht, und Empfang des Bezugssignals (BS) am ersten Objekt vorbestimmt und/oder bekannt und/oder wird diese gemessen und/oder ermittelt. Es wird eine Signalrundlaufzeit und optional eine Signallaufzeit und/oder Phasenrundlaufverschiebung zwischen erstem und zweitem Objekt aus der ersten Zeitdifferenz (dt1) und zweiten Zeitdifferenz (dt2) bestimmt, insbesondere berechnet. Mit besonderem Vorteil werden jeweils eine, insbesondere mehrere, gemessene erste und zweite Zeitdifferenzen an einem gemeinsamen Ort zur Auswertung bereitgestellt und insbesondere zur Signalrundlaufzeit, Signallaufzeit, zur Zeitsynchronisation und/oder Zeitbestimmung und/oder -korrektur verwendet.

Durch die hier bekannte Rundlaufzeit und damit doppelte Laufzeit zwischen ersten und zweiten Objekt kann eine noch erheblich genauere - weil um die Laufzeit korrigierte - Zeitsynchronisation erfolgen. Mit einer solchen Zeitsynchronisation wird die Verwendung von hochgenauen Uhren, wie in der US 4,087,816 noch erforderlich, überflüssig.

Insbesondere wird die Signalrundlaufzeit durch die Zeitdauer zwischen erstem Wechselzeitpunkt am ersten Objekt und Empfang des Bezugszeitpunkts des Bezugssignals am ersten Objekt abzüglich erster Zeitdifferenz (dt1) und abzüglich zweiter Zeitdifferenz (dt2) berechnet.

Insbesondere wird am zweiten Objekt die erste Zeitdifferenz ermittelt, insbesondere gemessen oder wird am ersten Objekt die zweite Zeitdifferenz ermittelt, insbesondere gemessen.

Das Bezugssignal kann so gesendet werden, dass es am Bezugszeitpunkt beginnt. Es kann auch vor dem Bezugszeitpunkt beginnen und an diesem Enden oder darüber hinaus abgestrahlt werden. Insbesondere weist es am Bezugszeitpunkt eine Änderung, beispielsweise eineFlanke oder einen Frequenzwechsel auf. Es kann auch vor und nach dem Bezugszeitpunkt abgestrahlt werden und am Bezugszeitpunkt, insbesondere für eine maximale Zeitdauer von 5 ms unterbrochen sein. So kann beispielsweise ein Teil des Bezugssignal, insbesondere ein zweites Signal (S2), vor dem Bezugszeitpunkt abgestrahlt werden und ein zweiter Teil des Bezugssignal, insbesondere ein zweites weiteres Signal (S2w) nach dem Bezugszeitpunkt abgestrahlt werden, insbesondere fällt der zweite Umschaltzeitpunkt, als Zeitpunkt an dem das zweite Signal mit einer zweiten Frequenz zum zweiten weiteren Signal eine zweite Phasenbeziehung (phi2) aufweist, auf den Bezugszeitpunkt. Um den Bezugszeitpunkt kann das Bezugssignal unterbrochen sein, insbesondere für maximal eine Zeitspanne von maximal fünf, insbesondere maximal zwei, Perioden des Bezugssignals, des zweiten oder des zweiten weiteren Signals und/oder von maximal 500 ms, insbesondere maximal 300 ms, insbesondere maximal 30 ms, insbesondere maximal 1 ms.

Bevorzugt wird das Verfahren so geführt, dass das Bezugssignal (BS) ein zweites Signal (S2), insbesondere vor dem ersten Bezugszeitpunkt (t1'), und mindestens ein zweites weiteres Signal (S2w.1), insbesondere nach dem ersten Bezugszeitpunkt (t1'), aufweist, wobei das zweite Signal (S2) eine zweite Frequenz und einen zweiten Phasenverlauf aufweist und das mindestens eine zweite weitere Signal (S2w.1) eine zweite weitere Frequenz und einen zweiten weiteren Phasenverlauf aufweist,
wobei der zweite Phasenverlauf des zweiten Signals (S2) zu dem zweiten weiteren Phasenverlauf des zweiten weiteren Signals (S2w.1) eine zweite Phasenbeziehung (phi2.1) aufweist, wobei die zweite Phasenbeziehung (phi2.1) vorbestimmt und/oder bekannt ist und/oder ermittelt wird,
wobei aus einem zeitlichen Phasenverlauf des am ersten Objekt empfangenen zweiten Signals (S2) und des zeitlichen Phasenverlaufs des am ersten Objekt empfangenen zweiten weiteren Signals (S2w.1) ein zweiter virtueller Frequenzwechselzeitpunkt (t2.1) bestimmt wird als ein Zeitpunkt, an dem die Phasenbeziehung zwischen einer interpolierten und/oder empfangenen Phasenlage des zweiten Signals (S2) und einer interpolierten und/oder empfangenen Phasenlage des zweiten weiteren Signals (S2w.1) der zweiten Phasenbeziehung (phi2.1) entspricht,
wobei am ersten Bezugszeitpunkt (auch zweiter Wechselzeitpunkt) (t1') die Phasenbeziehung zwischen der Phasenlage des zweiten Signals (S2) und der Phasenlage des zweiten weiteren Signals (S2w.1) am zweiten Objekt der zweiten Phasenbeziehung (phi2.1) entspricht.

Mit Vorteil wird die Phasenbeziehung am zweiten Objekt zwischen Bezugssignal (BS), zweitem Signal (S2) und/oder zweitem weiteren Signal (S2w.n), und erstem Signal (S1) und/oder die Phasenbeziehung zwischen Bezugssignal (BS), insbesondere zweitem Signal (S2) und/oder zweitem weiteren Signal(S2w), und erstem weitern Signal (S1w.n) bestimmt und/oder ist sie vorbestimmt.

Mit Vorteil wird die Phasenbeziehung am ersten Objekt zwischen Bezugssignal (BS), insbesondere zweitem Signal (S2) und/oder zweitem weiteren Signal (S2w), und erstem Signal (S1) und/oder die Phasenbeziehung zwischen Bezugssignal (BS), insbesondere zweitem Signal (S2) und/oder zweitem weiteren Signal (S2w.n), und erstem weitern Signal (S1w.n) bestimmt und/oder ist sie vorbestimmt.

Bevorzugt wird mindestens eine, insbesondere beide, dieser Phasenbeziehungen zur Entfernungsmessung zwischen erstem und zweitem Objekt und/oder zur Messung der Änderung der Entfernung zwischen erstem und zweitem Objekt verwendet.

Mittels der Phasenbeziehung(en) kann beispielsweise eine Phasenverschiebung im Signalrundlauf von erstem zu zweitem zu erstem Objekt oder von zweitem zu erstem zu zweitem Objekt oder die die Phasenverschiebung für den Weg vom ersten zum zweiten oder vom zweiten zum ersten Objekt bestimmt und darüber eine Entfernung oder Entfernungsänderung zwischen dem ersten und zweiten Objekt bestimmt werden.

Bevorzugt wird unter mehreren möglichen ersten virtuellen Frequenzwechselzeitpunkten zwischen einem ersten und einem ersten weiteren Signal oder zwischen zwei ersten weiteren Signalen (Sw1.n) der erste virtuelle Frequenzwechselzeitpunkt (t1.n) nach derselben Regel bestimmt, wie der erste Wechselzeitpunkt (t1') unter mehreren möglichen Wechselzeitpunkten zwischen dem ersten und dem ersten weiteren Signal. Für zweite und zweiter weitere Signale gilt dies bevorzugt entsprechend.

Alternativ oder zusätzlich wird bevorzugt unter mehreren möglichen ersten virtuellen Frequenzwechselzeitpunkten zwischen einem ersten und einem ersten weiteren Signal oder zwei ersten weiteren Signalen der oder ein mittler als der erste virtuelle Frequenzwechselzeitpunkt (t1) bestimmt, und unter mehreren möglichen ersten Wechselzeitpunkten zwischen einem ersten und einem ersten weiteren Signal oder zwischen zwei weiteren Signalen der oder ein mittlerer als der erste Wechselzeitpunkt (t1') bestimmt. Für zweite und zweiter weitere Signale gilt dies bevorzugt entsprechend.

Bevorzugt wird unter mehreren möglichen ersten virtuellen Frequenzwechselzeitpunkten zwischen einem ersten und einem ersten weiteren Signal oder zwei ersten weiteren Signalen derjenige als erster virtuelle Frequenzwechselzeitpunkt (t1) bestimmt, der im Signalverlauf des ersten Signals (S1) und ersten weiteren Signals (S1w) oder der zwei ersten weiteren Signalen an derselben Stelle liegt wie der erste Wechselzeitpunkt (t1').

Mit Vorteil werden nach einem ersten Signal (S1) hintereinander mehrere erste weiteres Signal (S1w.n) und/oder wird mehrfach hintereinander jeweils ein erstes Signal (S1) und ein, insbesondere jeweils anderes, erstes weiteres Signal (S1w.n) abgestrahlt, insbesondere ohne zwischenzeitlich ein zweites oder zweites weiteres Signal zu senden und/der ohne zwischenzeitlich am ersten und/oder zweiten Objekt zwischen Senden und Empfangen zu wechseln, insbesondere umzuschalten und/oder ohne am ersten und/oder zweiten Objekt einen Verstärker um-, an- und/oder auszuschalten. Dadurch lässt sich die Genauigkeit vergrößern und/oder lassen sich schnell hintereinander eine Mehrzahl von Messungen durchführen.

Mit Vorteil können zusätzlich oder alternativ nach einem zweiten Signal (S2) hintereinander mehrere zweites weiteres Signal (S2w) und/oder kann mehrfach hintereinander jeweils ein zweites Signal (S2) und ein zweites, insbesondere jeweils anderes, weiteres Signal (S2w.n) abgestrahlt werden, insbesondere ohne zwischenzeitlich ein erstes oder erstes weiteres Signal zu senden und/der ohne zwischenzeitlich am ersten und/oder zweiten Objekt zwischen Senden und Empfangen zu wechseln, insbesondere umzuschalten und/oder ohne am ersten und/oder zweiten Objekt einen Verstärker um-, an- und/oder auszuschalten. Dadurch lässt sich die Genauigkeit vergrößern und/oder lassen sich schnell hintereinander eine Mehrzahl von Messungen durchführen.

Insbesondere bedeutet mehrfach mindestens drei Mal, insbesondere mindestens fünf Mal.

Insbesondere wird zwischen jedem ersten weiteren Signal und dem darauf folgenden ersten oder ersten weiteren Signal ein erster virtueller Frequenzwechselzeitpunkt bestimmt. Insbesondere wird jeweils das vorausgehende erste weitere Signal als erstes Signal und das darauf folgende als erstes weitere Signal verstanden und das erfindungsgemäße Verfahren, mit oder ohne vorteilhaften Ausgestaltungen, mit dieser gedanklichen Umbenennung jeweils zusätzlich durchgeführt.

Insbesondere wird zwischen jedem zweiten weiteren Signal und dem darauf folgendem zweiten oder zweiten weiteren Signal ein zweiter virtueller Frequenzwechselzeitpunkt bestimmt. Insbesondere wird jeweils das vorausgehende zweite weitere Signal als zweites Signal und das darauf folgende als zweites weitere Signal verstanden und das erfindungsgemäße Verfahren, mit oder ohne vorteilhaften Ausgestaltungen, mit dieser gedanklichen Umbenennung jeweils zusätzlich durchgeführt.

Insbesondere wird ein erfindungsgemäßes Verfahren mehrfach wiederholt, insbesondere unmittelbar aufeinanderfolgend und/oder wobei am ersten Objekt (Sender) mehrere Frequenzwechsel durchgeführt werden und/oder mehrere erste weitere Signale nacheinander, insbesondere aufeinander folgend, abgestrahlt werden. Dabei werden für die ersten weiteren Signale insbesondere mindestens zwei, insbesondere mindestens vier unterschiedliche Frequenzen (f1w.n, z.B. f1w.1, f1w.2, f1w3., f1w.4) verwendet, die sich insbesondere auch alle von der ersten Frequenz unterscheiden. Dabei kann zwischen den ersten weiteren Signalen auch einmal oder mehrfach das erste Signal abgestrahlt werden. Möglich sind also beispielsweise Abfolgen wie f1, f1w.1, f1w.2, f1w.3, f1w.4 oder f1, f1w1, f1, f1w.2, fiw.3, f1w.4, f1.

Insbesondere wird in einer Reihe der Abstrahlung unterschiedlicher Frequenzen mindestens zwei Mal die erste oder zweite Frequenz abgestrahlt, wobei dazwischen mit einer weiteren Frequenz abgestrahlt wird.

Die Umschaltungen zwischen den Frequenzen erfolgt dabei insbesondere wie zwischen erster und erster weiteren Frequenz beschrieben, beispielsweise zischen f1w.1 und f1w.2.

Insbesondere werden die erste und die ersten weiteren Frequenzen so gewählt, dass sich maximal viele unterschiedliche Differenzfrequenzen aus der ersten und den ersten weiteren Frequenzen bilden lassen.

Insbesondere werden die erste und die zweite und die mindestens eine erste weitere und die mindestens eine zweite weitere Frequenz so gewählt, dass sich maximal viele unterschiedliche Differenzfrequenzen aus der ersten, der zweiten und der mindestens einen ersten weiteren und der mindestens einen zweiten weiteren Frequenzen bilden lassen.

Insbesondere weisen die erste und die ersten weiteren Frequenzen keine gleichen Abstände auf.

Insbesondere weisen die erste und die mindestens eine erste weitere Frequenz und die zweite und die mindestens eine zweite weitere Frequenz keine gleichen Abstände auf.

Mit Vorteil sind die Abstände zwischen den Wechseln der ersten weiteren Frequenz gleichbleibend, vorbestimmt und/oder bestimmbar, insbesondere aus vorausgehenden Signalen und insbesondere weisen sie einen zeitlichen Abstand im Bereich von 1 *µs* bis 200*µ*s auf.

Insbesondere werden zunächst vom ersten Objekt ein erstes Signal (S1) und mindestens ein erstes weiteres Signal (S1w.n) gefolgt von der Abstrahlung vom zweiten Objekt eines zweiten (S2) und mindestens drei, insbesondere mindestens fünf, zweiten weiteren Signalen (S2w.n) abgestrahlt. Dabei erfolgt die Abstrahlung vom zweiten Objekt insbesondere nach dem Empfang des ersten und/oder eines ersten weiteren Signals.

Insbesondere beinhaltet das Bezugssignal (BS) ein zweites und mindestens drei, insbesondere mindestens fünf, zweite weitere Signale (S2w.n).

Insbesondere werden vom zweiten Objekt ein zweites Signal und mindestens ein zweites weiteres Signal abgestrahlt, gefolgt von der Abstrahlung vom ersten Objekt eines ersten und mindestens drei, insbesondere mindestens fünf, ersten weiteren Signalen.

Mit besonderem Vorteil wird mindestens ein erster virtueller Frequenzwechselzeitpunkt jeweils auf Basis von je mindestens zwei, insbesondere je mindestens zehn, Abtastungen des ersten und des ersten ersten weiteren Signals oder mindestens zweier erster weiterer Signale bestimmt und/oder wird mindestens ein zweiter virtueller Frequenzwechselzeitpunkt jeweils auf Basis von je mindestens zwei, insbesondere je mindestens zehn, Abtastungen des zweiten und des ersten zweiten weiteren Signals oder mindestens zweier zweiter weiterer Signale bestimmt.

Mit Vorteil sind und/oder werden im ersten, zweiten, ersten weiteren und/oder zweiten weiteren Signal und/oder im Bezugssignal Informationen beinhaltet, insbesondere aufmoduliert, insbesondere solche die zur Durchführung des erfindungsgemäßen Verfahrens verwendet werden und/oder solche die Nutzdaten eines Übertragungssystems darstellen.

Insbesondere ist die Phase des ersten Signals zur Phase des ersten weiteren Signals im Wechselzeitpunkt kohärent, ist die erste Phasenbeziehung Gleichheit und/oder ist die Phase des zweiten Signals zur Phase des zweiten weiteren Signals im Wechselzeitpunkt kohärent und/oder ist die zweite Phasenbeziehung Gleichheit und/oder beträgt die erste und/oder die zweite Phasendifferenz mindestens 5°.

Insbesondere unterscheiden sich erste und erste weitere Frequenzen. Insbesondere unterscheiden sich zweite und zweite weitere Frequenzen. Insbesondere unterscheiden sich mehrere erste weitere Signale in ihren Frequenzen und/oder unterscheiden sich mehrere zweite weitere Signale in ihren Frequenzen. Dabei müssen sich nicht alle unterscheiden bevorzugt werden mindestens fünf, insbesondere mindestens zehn, unterschiedliche Frequenzen in ersten und ersten weiteren, insbesondere aufeinander folgenden, Signalen verwendet. Bevorzugt werden mindestens fünf, insbesondere mindestens zehn, unterschiedliche Frequenzen in zweiten und zweiten weiteren, insbesondere aufeinander folgenden, Signalen verwendet.

Zu beachten ist, dass der abgestrahlte Phasenverlauf nicht unbedingt dem empfangenen Phasenverlauf entsprechen muss, da Umwelteinflüsse das Signal verändern können. Durch Mulitpathingeffekte können sich beispielsweise Signalanteile des abgestrahlten Signals am Empfänger zeitversetzt überlagern und das Signal verfälschen. Das erfindungsgemäße Verfahren ist insbesondere ausgebildet und die erfindungsgemäßen Vorrichtungen sind insbesondere so ausgebildet, dass die virtuellen Frequenzwechselzeitpunkte an einem Signalanteil, insbesondere dem Signalanteil mit der größten Leistung am Empfänger und/oder dem frühesten Signalanteil am Empfänger, bestimmt werden.

In einer vorteilhaften Ausführung erfolgt das Bestimmen des ersten ersten virtuellen Frequenzwechselzeitpunktes durch Extrapolation von Abtastungen des ersten Signals am zweiten Objekt, insbesondere mittels Interpolation und/oder Ausgleichungsrechnung der Abtastungen des ersten Signals am zweiten Objekt, insbesondere auf einen vorbestimmten und/oder erwarteten Signalverlauf, und Extrapolation der Abtastungen des ersten ersten weiteren Signals am zweiten Objekt, insbesondere mittels Interpolation und/oder Ausgleichungsrechnung der Abtastungen des ersten Signals am zweiten Objekt, insbesondere auf einen vorbestimmten und/oder erwarteten Signalverlauf, und Bestimmen eines Zeitpunktes als erster virtueller Frequenzwechselzeitpunkt, an dem die extrapolierten Phasen die erste Phasenbeziehung (phi1.1) aufweisen, insbesondere betrachtet modulo 2 Pi. Dabei kommt es lediglich darauf an, dass die Abtastungen am zweiten Objekt vorgenommen werden, die weiteren Schritte können am zweiten Objekt durchgeführt werden. Die Ergebnisse der Abtastungen können aber auch zu einer Auswerteieinheit, z.B. separat angeordnet oder im ersten und/oder zweiten Objekt, übertragen werden und die weiteren Schritte von der Auswerteeinheit durchgeführt werden. Analoges gilt bevorzugt für die anderen virtuellen Frequenzwechselzeitpunktes entsprechend.

In einer anderen vorteilhaften Ausbildung erfolgt das Bestimmen des ersten virtuellen Frequenzwechselzeitpunktes durch Extrapolation der, insbesondere interpolierten und/oder durch Ausgleichungsrechnung angenäherten, aufsummierten Phasenänderung des ersten Signals, insbesondere in die Zukunft, und durch Extrapolation der, insbesondere interpolierten und/oder durch Ausgleichungsrechnung angenäherten, aufsummierten Phasenänderung des ersten weiteren Signals, insbesondere in die Vergangenheit, und Bestimmen eines Zeitpunktes, bei dem die extrapolierten aufsummierten Phasen die erste Phasenbeziehung aufweisen, insbesondere betrachtet modulo 2 Pi.

Insbesondere werden vor der Interpolation, Ausgleichungsrechnung und/oder Extrapolation durch Modulation und/oder Signalverfälschung bedingte Phasenänderungen Modulation herausgerechnet.

Insbesondere erfolgt die Zuordnung der Abtastungen des ersten und/oder der ersten weiteren Signale zum ersten bzw. ersten weiteren Signal basierend auf einer Mehrzahl von Ausgleichsrechnungen und/oder Interpolationen, Erwartungen und/oder Annahmen zur Lage des virtuellen Frequenzwechselzeitpunktes und/oder ersten Wechselzeitpunkts im Verlauf des ersten und ersten weiteren Signals und/oder anhand der Erkennung einer Unterbrechung und/oder Veränderung des Signalverlaufs. Analoges gilt für das zweite und zweite weitere Signale. Zum erstem virtuellen Frequenzwechselzeitpunkt und/oder zu seiner Bestimmung Ausgeführtes gilt analog vorteilhafterweise alternativ oder zusätzlich auch für den zweiten virtuellen Frequenzwechselzeitpunkt und/oder seine Bestimmung.

Vorteilhafterweise ist, insbesondere am zweiten Objekt, der Phasenverlauf des ersten Signals und/oder des ersten weiteren Signals, zumindest der Phasenverlauf bei dessen Abstrahlung, bekannt, vorbestimmt oder ableitbar, insbesondere aus mindestens einem ersten und/oder ersten weiteren Signal.

Vorteilhafterweise ist, insbesondere am ersten Objekt, der Phasenverlauf des zweiten Signals und/oder des zweiten weiteren Signals, zumindest der Phasenverlauf bei dessen Abstrahlung, bekannt, vorbestimmt oder ableitbar, insbesondere aus mindestens einem zweiten und/oder zweiten weiteren Signal.

Vorteilhafterweise ist das erste Signal, das zweite Signal, das erste weitere Signal und/oder das zweite weitere Signal ein periodischer Träger und/oder ein periodischer Träger mit aufmodulierten Informationen, beispielsweise mittels FSK, BPSK, OAM, n-QAM. Insbesondere ist das erste Signal, das zweite Signal, das mindestens eine erste weitere Signal und/oder das mindestens eine zweite weitere Signal ein periodisches Signal. Insbesondere ist das erste Signal, das zweite Signal, das mindestens eine erste weitere Signal und/oder das mindestens eine zweite weitere Signal so frequenzstabil, dass der Phasenjitter, insbesondere im Fourierfrequenzbereich von 100 bis 300 kHz, geringer ist als 15° und/oder die Frequenz innerhalb einer Sekunde um nicht mehr als +/- 20 Herz schwankt und/oder die Frequenzverteilung eine Standardabweichung von weniger als 20 Herz aufweist.

Mit besonderem Vorteil ist das erste Signal, das zweite Signal, das mindestens eine erste weitere Signal und/oder das mindestens eine zweite weitere Signal ein Funksignal eines bekannten digitalen, insbesondere drahtlosen, Übertragungssystems und/oder eines seiner Komponenten, beispielsweise WLAN-System, Bluetooth-System, RFID-System, LTE-System, UMTS-System, Mobilfunk-System. Insbesondere wird das Verfahren in einem solchen System realisiert. Insbesondere ist der Wechsel zwischen erster und erster weiterer Frequenz und/oder der Wechsel zwischen zweiter und/oder zweiter weiterer Frequenz ein in einem solchen System vorgesehener Frequenzwechsel, beispielsweise im Rahmen eines vorgesehenen Frequenzhoppings.

Mit besonderem Vorteil sind/werden örtlich fix mit dem zweiten Objekt verbunden aber von diesem beabstandet, insbesondere um mindestens 10 cm beabstandet, mehrere zweite Empfangsvorrichtungen zum Empfang des ersten und mindestens einen ersten weiteren Signals vorgesehen und/oder wird bezüglich jeder der mehreren zweiten Empfangsvorrichtungen mindestens ein, insbesondere pro Frequenzumschaltung zwischen erstem und erstem weiteren und/oder zwischen ersten weiteren Signalen, ein virtueller Frequenzwechselzeitpunkt bestimmt. Insbesondere ist das zweite Objekt und sind die mehreren zweiten Empfangsvorrichtungen Teil eines Kraftfahrzeuges und/oder das erste Objekt ein Zugangsmittel, insbesondere ein drahtloser Schlüssel. Insbesondere ist das zweite Objekt und sind die mehreren zweiten Empfangsvorrichtungen Teil eines Zugangsmittel, insbesondere eines drahtlosen Schlüssels, und/oder ist das erste Objekt ein Kraftfahrzeug. Insbesondere wird auf Basis der am zweiten Objekt und/oder den mehreren zweiten Empfangsvorrichtungen empfangenen ersten und dem mindestens einen ersten weiteren Signal eine Richtung und/oder eine Entfernung bestimmt, in der das erste Objekt liegt, insbesondere durch Triangulation, insbesondere durch eine Auswerteeinheit. Insbesondere wird auf Basis der am zweiten Objekt und/oder den mehreren zweiten Empfangsvorrichtungen empfangenen ersten und mindestens einen ersten weiteren Signal ein Winkel und/oder eine Winkeldifferenz zwischen erstem und zweitem Objekt und/oder einer der mehreren zweiten Empfangsvorrichtungen und/oder zwischen zweitem Objekt und einer der mehreren zweiten Empfangsvorrichtungen, insbesondere durch Phasenvergleich des ersten und ersten weiteren Signals am zweiten Objekt und/oder den mehreren zweiten Empfangsvorrichtungen, insbesondere durch eine Auswerteeinheit. Insbesondere wird dadurch ein relative Orientierung, ein Winkel, eine Änderung der relativen Orientierung und/oder des Winkels, eine Entfernung und/oder Änderung der Entfernung zwischen mindestens einem ersten und einem zweiten Objekt und/oder einer zweiten Empfangsvorrichtung bestimmt, insbesondere durch eine Auswerteeinheit.

Mit besonderem Vorteil sind/werden örtlich fix mit dem ersten Objekt verbunden aber von diesem beabstandet, insbesondere um mindestens 10 cm beabstandet, mehrere erste Objekte vorgesehen und/oder wird bezüglich jedes der mehreren ersten Objekten das erfindungsgemäße Abstrahlen und/oder Verfahren durchgeführt und wird insbesondere aus den am zweiten Objekt empfangenen ersten und ersten weiteren Signalen bezüglich jedes ersten Objekts mindestens ein virtueller Frequenzwechselzeitpunkt bestimmt. Mit besonderem Vorteil sind/werden örtlich fix mit dem zweiten Objekt verbunden aber von diesem beabstandet, insbesondere um mindestens 10 cm beabstandet, mehrere zweite Objekte vorgesehen und/oder wird bezüglich jedes der mehreren zweiten Objekten das erfindungsgemäße Abstrahlen und/oder Verfahren durchgeführt und wird insbesondere aus den am ersten Objekt empfangenen ersten und ersten weiteren Signalen bezüglich jedes zweiten Objekts mindestens ein virtueller Frequenzwechselzeitpunkt bestimmt, insbesondere durch eine Auswerteeinheit. Insbesondere wird dadurch eine relative Orientierung, ein Winkel, eine Änderung der relativen Orientierung und/oder des Winkels, eine Entfernung und/oder Änderung der Entfernung zwischen mindestens einem ersten und einem zweiten Objekt bestimmt, insbesondere durch eine Auswerteeinheit.

Mit besonderem Vorteil wird auf Grund der Phasenänderung zwischen einem ersten empfangenen Signal und mehrerer empfangenen ersten weiteren Signalen eine Entfernungsänderung zwischen erstem und zweitem Objekt bestimmt und/oder wird daraus bestimmt, um welche Länge sich mindestens zwei Signalwege des ersten und der ersten weiteren Signal unterscheiden, insbesondere unter Annahme einer statischen Anordnung und Umgebung des ersten und zweiten Objekts während der Übertragung des ersten und der ersten weiteren Signale, insbesondere durch eine Auswerteeinheit. Insbesondere wird der kürzeste Signalweg und/oder der Signalanteil bestimmt, der über den kürzesten Signalweg empfangen wurde, insbesondere durch eine Auswerteeinheit.

Mit besonderem Vorteil wird auf Grund der Phasenänderung zwischen einem empfangenen zweiten Signal und mehrerer empfangenen zweiten weiteren Signalen eine Entfernungsänderung zwischen erstem und zweitem Objekt bestimmt und/oder wird daraus bestimmt, um welche Länge sich mindestens zwei Signalwege des zweiten und der zweiten weiteren Signale unterscheiden, insbesondere unter Annahme einer statischen Anordnung und Umgebung des ersten und zweiten Objekts während der Übertragung des zweiten und der zweiten weiteren Signale, insbesondere durch eine Auswerteeinheit. Insbesondere wird der kürzeste Signalweg und/oder der Signalanteil bestimmt, der über den kürzesten Signalweg empfangen wurde.

Mit besonderen Vorteil wird aufgrund der Phasenänderung zwischen einem empfangenen ersten Signal und mehrerer empfangener ersten weiteren Signalen ein Einstrahlwinkel und/oder eine Änderung dessen zwischen ersten und zweiten Objekt bestimmt und/oder wird daraus bestimmt, um welchen Einstrahl- und/oder Abstrahlwinkel sich mindestens zwei Signalwege des ersten und der ersten weiteren Signale unterscheiden, insbesondere unter der Annahme einer statischen Anordnung und Umgebung des ersten und zweiten Objekts und/oder der Empfangsvorrichtungen und des zweiten Objekts während der Übertragung des ersten und der ersten weiteren Signale, insbesondere durch eine Auswerteeinheit.

Mit besonderen Vorteil wird aufgrund der Phasenänderung zwischen einem empfangenen zweiten Signal und mehrerer empfangenen zweiten weiteren Signalen eine relative Orientierung, ein Winkel, eine Änderung der relativen Orientierung und/oder des Winkels, eine Entfernung und/oder Änderung der Entfernung zwischen mindestens dem ersten und dem zweiten Objekt bestimmt, insbesondere durch eine Auswerteeinheit und/oder wird daraus bestimmt, um welchen Einstrahl- und/oder Abstrahlwinkel sich mindestens zwei Signalwege des zweiten und der zweiten weiteren Signale unterscheiden, insbesondere unter der Annahme einer statischen Anordnung und Umgebung des ersten und zweiten Objekts und/oder der Empfangsvorrichtungen und des ersten und/oder zweiten Objekts während der Übertragung des zweiten und der zweiten weiteren Signale, insbesondere durch eine Auswerteeinheit.

Weitere Vorteile und Merkmale der Erfindung ergeben sich aus der nachstehenden Beschreibung eines Ausführungsbeispiels anhand der beigefügten Figuren. Dabei zeigen:
- Fig. 1: eine Veranschaulichung der Umschaltung zwischen zwei PLLs,
- Fig. 2: eine Veranschaulichung zur Bestimmung mehrerer virtueller Frequenzwechselzeitpunkte,
- Fig. 3: eine Veranschaulichung zur Bestimmung eines virtuellen Frequenzwechselzeitpunktes mit Phasenoffset,
- Fig. 4: eine Veranschaulichung eines ersten Signals und eines ersten weiteren Signals zusammen mit dem zur Erzeugung verwendeten binären Signals,
- Fig. 5: eine Veranschaulichung eines ersten Signals und eines ersten weiteren Signals zusammen mit dem zur Erzeugung verwendeten binären Signals,
- Fig. 6: eine Veranschaulichung zur Bestimmung eines virtuellen Frequenzwechselzeitpunktes,
- Fig. 7: eine Veranschaulichung einer Signalrundlaufzeitmessung,
- Fig. 8: eine Veranschaulichung zweier Signalrundlaufzeitmessungen und
- Fig. 9: eine Veranschaulichung einer Abfolge mehrerer weiterer ersten und weiterer zweiten Signalen zur Signalrundlaufzeitmessung.

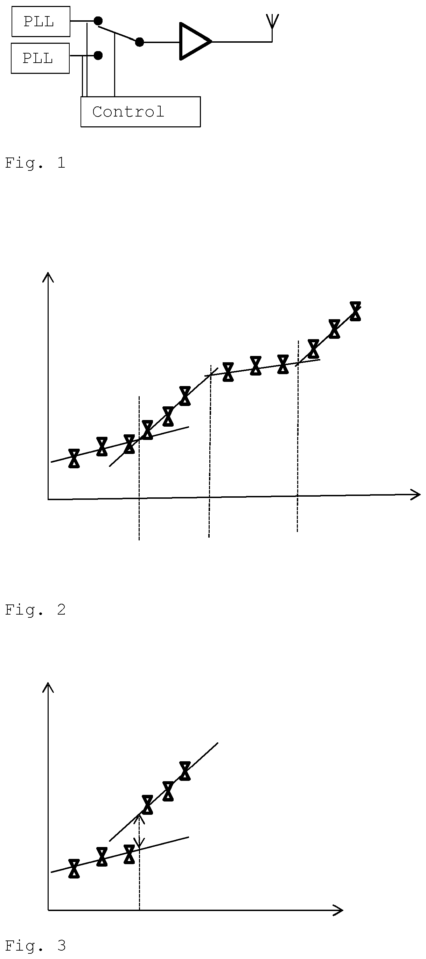

In Fig. 1 sind zwei PLLs zu erkennen, die mittels eines nachgelagerten Umschalters ihr Ausgangssignal über einen Verstärker auf eine Antenne geben können. Dabei kann immer nur das Signal einer PLL weitergeleitet werden. Die PLLs können jeweils auf unterschiedliche Frequenzen eingestellt werden.

Des Weiteren ist eine Steuerung (Control) zu erkennen, die eingerichtet ist, die Phasen der Signale der PLLs auszuwerten und einen Wechselzeitpunkt zu berechnen, an dem sie den Umschalter umschaltet, sodass sich ein kontinuierliches phasenkohärentes Signal ergibt. Als Schalter werden insbesondere Schaltelemente ausgeführt als Halbleiter verwendet, beispielsweise Transistoren oder MOSFETs.

Figur 2 zeigt Phasenmessung an einem ersten Signal (S1) (linke drei Marken) und an drei ersten weiteren Signalen (S1w.1 - S1w.3) (jeweils nächsten drei Marken) mit unterschiedlichen Frequenzen (f1, f1w.1 - f1w.1 - f1w.3), die an einem zweiten Objekt empfangen wurden, nachdem sie von einem ersten Objekt abgestrahlt wurden, aufgetragen gegen die Zeit sowie als Geraden auf Interpolation basierende Extrapolationen der Messwerte. Die Schnittpunkte der Geraden sind durch je eine vertikale gestrichelte Linie gekennzeichnet und markiert den ersten virtuellen Frequenzwechselzeitpunkt (linke gestrichelte Linie), und weitere virtuelle Frequenzwechselzeitpunkte (folgenden gestrichelten Linien) die jeweils auf diese Weise bestimmbar sind unter der Annahme phasenkohärenter Umschaltung (erste und weitere Phasendifferenzen jeweils gleich null).

Figur 3 zeigt Phasenmessung an einem ersten Signal (linke drei Marken) und an einem ersten weiteren Signal (rechte drei Marken) aufgetragen gegen die Zeit sowie als Geraden auf Interpolation basierende Extrapolationen der Messwerte. Die vertikale gestrichelte Linie kennzeichnet den ersten virtuellen Frequenzwechselzeitpunkt, der auf diese Weise bestimmbar ist unter der Annahme einer Umschaltung mit einer ersten Phasendifferenz die dem Doppelpfeil entspricht (erste Phasendifferenz < > O).

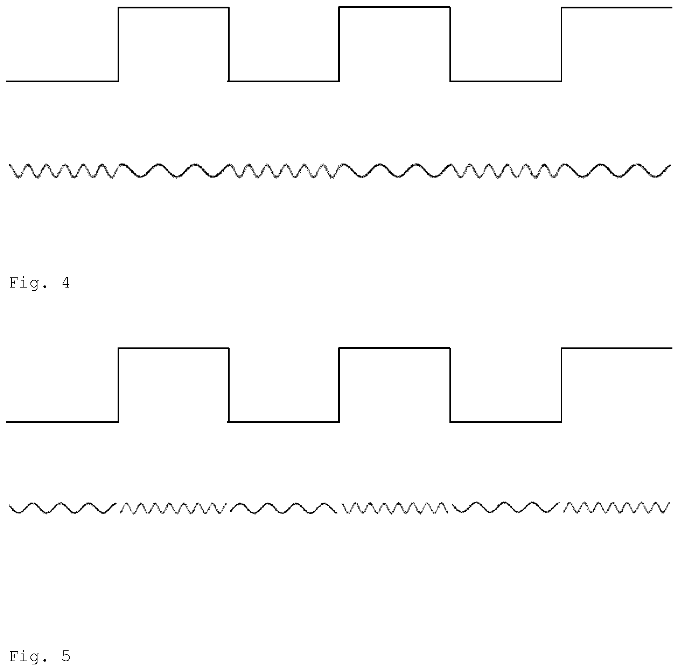

Figur 4 zeigt oben ein binäres Signal und unten ein unter Frequenzumtastung durch kohärente Umschaltung zwischen zwei auf unterschiedliche Frequenzen gestimmte PLLs. Darunter ist das sich ergebene Signal als wiederholende Abfolge von erstem und weiterem ersten Signal gekennzeichnet. Grundsätzlich wird bei Wiederholungen (auch mit unterschiedlichen Frequenzen) vorteilhafterweise auch der Wechsel zwischen erster weiterer Frequenz zu erster Frequenz ausgewertet, beispielsweise in dem das Verfahren durchgeführt wird unter der Annahme, dass des erste weitere Signal das erste Signal darstellt und das darauffolgende erste Signal das erste weitere Signal darstellt.

Figur 5 zeigt eine Veranschaulichung wie in Figur 4, mit dem Unterschied, dass jede Umschaltung (Frequenzumtastung) eine kleine zeitliche Lücke und einen vorbestimmten Phasensprung bedingt.

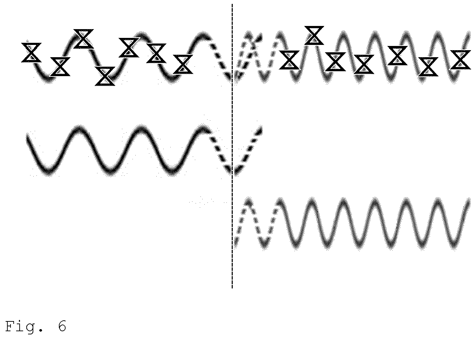

Figur 6 zeigt eine alternative Bestimmung eines ersten virtuellen Frequenzwechselzeitpunktes bei phasenkohärenter Umschaltung. Dargestellt sind in der oberen Zeile Abtastungen am ersten Signal (linke sieben Marken) und Abtastungen am ersten weiteren Signal (rechte sieben Marken) im zeitlichen Verlauf von links nach rechts. Als durchgezogene Linien ist der zeitliche Verlauf des ersten Signals (links) und des ersten weiteren Signals (rechts) veranschaulicht. Im Bereich der gestrichelten Fortführung liegt kein Signal vor oder wird kein Signal empfangen. Die gestrichelten Linien können durch je Extrapolation an je einer Ausgleichsrechnung an den Abtastwerten des ersten Signals bzw. des ersten weiteren Signals bestimmt werden. Daraus lässt sich der erste virtuelle Frequenzwechselzeitpunkt, gekennzeichnet durch eine vertikale gestrichelte Linie, ermitteln. Zu beachten ist, dass nicht jede Berührung der gestrichelten Linien einen virtuellen Frequenzwechselzeitpunkt kennzeichnet, da die Phasenlage identisch sein muss.

Darunter sind jeweils einzeln die Ergebnisse der Ausgleichsrechnung und die Extrapolationen gezeigt.

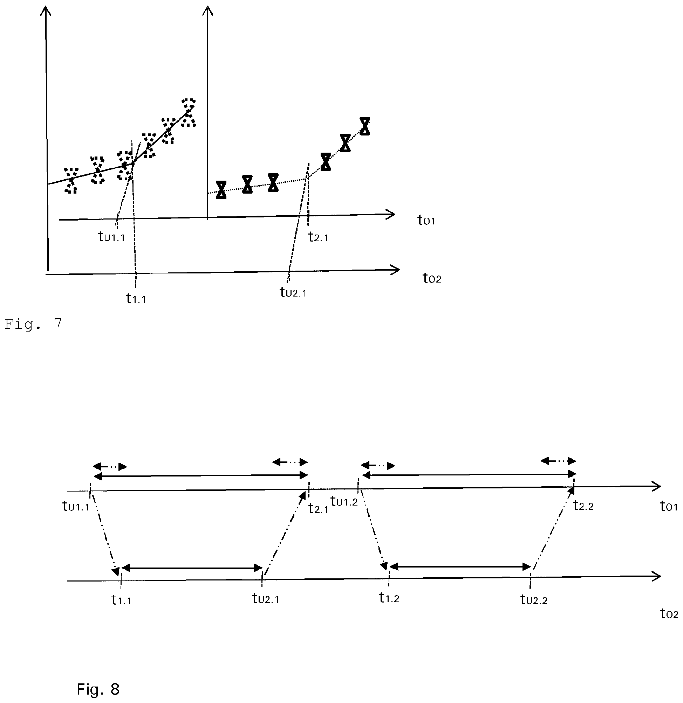

Fig. 7 zeigt wieder die Phase aufgetragen gegen die Zeit. Zu erkennen sind zwei Zeitachsen, eine für die Zeit am ersten Objekt, t_{O1}, und eine für die zweite am zweiten Objekt, t_{O2}, links dargestellt sind die vom ersten Objekt abgestrahlten am zweiten Objekt empfangenen Signale (erstes Signal und erstes weiteres Signal), an denen das zweite Objekt Phasenmessungen vornimmt (gestrichelte Messpunkte). Das erste Objekt hat dabei die Frequenz ohne Phasensprung zum Zeitpunkt t_{U1.1} umgeschaltet oder gewechselt. Aus den Messpunkten der Phasenmessungen des zweiten Objekts kann der entsprechende virtuelle Frequenzwechselzeitpunkt t_{1.1} bestimmt werden. Das ist nach obigen Ausführungen auch bei anderen Umschaltarten, beispielsweise mit Unterbrechung der Abstrahlung und/oder mit Phasensprung möglich. Anschließend werden am ersten Objekt vom zweiten Objekt abgestrahlte Bezugssignal empfangen, zweites Signal und zweites weiteres Signal. Dabei hat das zweite Objekt zum Zeitpunkt t_{U2.1} die Frequenz phasenkohärent gewechselt. Das erste Objekt nimmt an den Signalen Phasenmessungen vor (Messpunkte im rechten Teil der Figur). Daraus lässt sich der entsprechende zweite virtuelle Frequenzwechselzeitpunkt bestimmen.

Aus der am ersten Objekt bestimmten ersten Zeitspanne von t_{U1.1} bis t_{2.1} und der am zweiten Objekt bestimmten zweiten Zeitspanne von t_{1.1} bis t_{U2.1} lässt sich die Signalrundlaufzeit durch Subtraktion der zweiten Zeitspanne von der ersten berechnen. Dies soll nun anhand der nachfolgenden Figuren noch einmal näher erläutert werden.

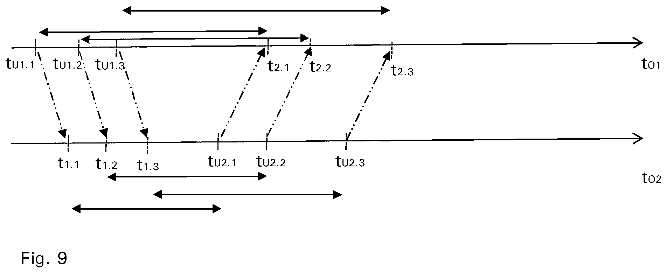

Fig. 8 zeigt im linken Teil das Szenario aus Fig. 7. Die schrägen gestrichelten Pfeile veranschaulichen die Funkübertragung zuerst vom ersten Objekt zum zweiten und dann vom zweiten Objekt zum ersten. Dabei wird zu den gekennzeichneten Zeitpunkten, beispielsweise t_{U1.1} aber kein Impuls übertragen, sondern liegt dort die Umschaltung, so dass bei Frequenzwechsel mit Unterbrechung zu dieser Zeit gerade gar kein Signal übertragen wird. Die Pfeile zwischen den Zeitachsen dienen also mehr der Veranschaulichung der Übertragung als der Darstellung eines tatsächlichen Signals. Die oben erläuterte erste und zweite Zeitdifferenz sind als Zeitspannen mit jeweils einem Doppelpfeil gekennzeichnet. Zu erkennen ist, dass ihre Differenz mit der Summe der Signallaufzeiten übereinstimmt. Diese Signallaufzeiten sind über dem oberen Zeitstrahl noch einmal als gestrichelte Doppelpfeile parallel zum Zeitstrahl veranschaulicht. Im weiteren Zeitverlauf, also in der Figur weiter rechts, ist eine weitere Durchführung des Szenarios aus Figur 7 gezeigt, die insbesondere mit anderen Frequenzen durchgeführt wird. So lässt sich beispielsweise die Genauigkeit erhöhen oder lassen sich zur Entfernungsmessung basierend auf Phasenverschiebungen Mehrdeutigkeiten vermeiden, wenn die Messungen kombiniert ausgewertet werden. Bevorzugt wird es aber, die Durchführungen nicht wie in Figur 8 zeitlich getrennt nacheinander durchzuführen, sondern mit mehreren aufeinanderfolgenden ersten und mit mehreren aufeinanderfolgenden zweiten weiteren Signalen zu arbeiten, wie dies beispielsweise Figur 9 veranschaulicht.

Figur 9 zeigt in der Notation aus Figur 8 eine Durchführung mit einem ersten Signal und drei ersten weiteren Signalen und einem zweiten Signal und drei zweiten weiteren Signalen, bei denen es drei erste Umschaltzeitpunkte oder Wechselzeitpunkte t_{U1.n}, drei erste virtuelle Frequenzwechselzeitpunkte t_{1.n}, drei zweite Umschalt- oder Wechselzeitpunkte t_{U2.n} und drei zweite virtuelle Frequenzwechselzeitpunkte t_{2.n} gibt. Zu erkennen ist, dass der Zeitabstand zwischen erstem ersten virtuellen Frequenzwechselzeitpunkt und erstem zweiten Frequenzumschaltzeitpunkt (unterster Doppelpeil in Figur 9) etwa mit dem Zeitabstand zwischen zweitem ersten virtuellen Frequenzwechselzeitpunkt und zweitem zweiten Frequenzumschaltzeitpunkt (dritter Doppelpeil von unten in Figur 9) übereinstimmen, der Zeitabstand zwischen drittem ersten virtuellen Frequenzwechselzeitpunkt und drittem zweiten Frequenzumschaltzeitpunkt (zweiter Doppelpeil von unten in Figur 9) deutlich größer ist. Dies soll verdeutlichen, dass es auf die Länge dieser Zeitabstände nicht ankommt, diese lediglich bekannt sein müssen (vorbestimmt oder gemessen).

Aus den Messungen lassen sich nun direkt drei Signalrundlaufzeiten bestimmen. Bei Berechnung von weiteren Zeitabständen zwischen den jeweils auf einem Zeitstrahl eingezeichneten Zeitpunkten lassen sich aber auch weitere Signalrundlaufzeiten bestimmen.

Durch diese Bestimmung lassen sich nun aber auch die Uhren oder Zeiten der beiden Objekte mit sehr großer Genauigkeit synchronisieren oder korrigieren. Aus der Signalrundlaufzeit (gegebenenfalls gemittelt aus mehreren Bestimmungen) lässt sich durch Halbieren die Signallaufzeit bestimmen. Somit kann zum Beispiel das zweite Objekt durch Abzug der Signallaufzeit (halbe Rundlaufzeit) vom Zeitpunkt t_{1.1} die genaue Lage des Zeitpunktes t_{U1.1} am ersten Objekt auf seiner Uhr des zweiten Objekts bestimmen. Damit lässt sich nun aber auch die Uhr am zweiten Objekt sehr großer Genauigkeit mit der am ersten Objekt synchronisieren. So lässt sich, bei gegebener Hardware, ein Zeitabgleich durchführen, der weitaus genauer ist als dies mit bekannten Methoden bisher möglich war.

## Patentansprüche

1. Verfahren zur Bestimmung eines Zeitpunktes, einer Entfernung, Laufzeit und/oder zur Synchronisierung zweier Zeitmessungen, wobei ein erster virtueller Frequenzwechselzeitpunkt
(t1) zwischen einer ersten Frequenz
(f1) eines ersten von einem ersten Objekt abgestrahlten, einen ersten Phasenverlauf aufweisenden Signals (S1) und einer ersten weiteren Frequenz (f1w.n) eines ersten weiteren von dem ersten Objekt abgestrahlten, einen ersten weiteren Phasenverlauf aufweisenden Signals (S1w.n) und
ein Bezugszeitpunkt verwendet wird, wobei ein Bezugssignal von einem zweiten Objekt so gesendet wird, dass es am Bezugszeitpunkt eine Änderung aufweist,
wobei der erste Phasenverlauf des ersten Signals (S1) zu dem ersten weiteren Phasenverlauf des ersten weiteren Signals (S1w.n) am ersten Objekt zu einem ersten Wechselzeitpunkt (t_{U1.n}) eine erste Phasenbeziehung (phi1.1) aufweist, wobei die erste Phasenbeziehung (phi1.1) vorbestimmt und/oder bekannt ist und/oder ermittelt wird,
wobei aus einem an dem zweiten Objekt empfangenen Phasenverlauf des am zweiten Objekt empfangenen ersten Signals (S1) und einem an dem zweiten Objekt empfangenen Phasenverlauf des am zweiten Objekt empfangenen ersten weiteren Signals (S1w.1) der erste virtuelle Frequenzwechselzeitpunkt (t1) bestimmt wird als ein Zeitpunkt, an dem die Phasenbeziehung zwischen den interpolierten und/oder empfangenen Phasenlagen des ersten und des ersten weiteren Signals (S1, S1w.1) der ersten Phasenbeziehung (phi1.1) entspricht, wobei am zweiten Objekt eine erste Zeitdifferenz (dt1) zwischen dem ersten virtuellen Frequenzwechselzeitpunkt (t1.n) und dem Bezugszeitpunkt (t1') vorbestimmt und/oder bekannt ist und/oder diese gemessen und/oder ermittelt wird, und
wobei am ersten Objekt eine zweite Zeitdifferenz (dt2) zwischen dem ersten Wechselzeitpunkt, und Empfang des Bezugssignals (BS) am ersten Objekt vorbestimmt und/oder bekannt ist und/oder gemessen und/oder ermittelt wird und aus der zweiten Zeitdifferenz und der ersten Zeitdifferenz eine Signalrundlaufzeit zwischen dem ersten Objekt und dem zweiten Objekt bestimmt wird.

2. Verfahren nach vorstehendem Anspruch, **dadurch gekennzeichnet, dass** das Bezugssignal so gesendet wird, dass es am Bezugszeitpunkt beginnt.

3. Verfahren nach einem der vorstehenden Ansprüche, wobei mindestens zwei erste weitere Signale vom ersten Objekt abgestrahlt werden und wobei zwei erste virtuelle Frequenzwechselzeitpunkte zwischen der ersten Frequenz (f1) und zwei ersten weiteren Frequenzen (F1w.n) bestimmt werden, wobei zwischen aufeinanderfolgenden ersten und/oder ersten weiteren Signalen am ersten Objekt erste Phasenbeziehungen (phi1.n) bestehen, wobei die ersten Phasenbeziehungen (phi1.n) am ersten Objekt vorbestimmt und/oder bekannt sind und/oder ermittelt werden, wobei aus einem an dem zweiten Objekt empfangen Phasenverlauf des am zweiten Objekt empfangenen ersten Signals (S1) und den Phasenverläufen der am zweiten Objekt empfangenen mindestens zwei ersten weiteren Signalen (S1w.n) die zwei ersten virtuellen Frequenzwechselzeitpunkte (t1.n) bestimmt werden, jeweils als ein Zeitpunkt, an dem die Phasenbeziehung zwischen den interpolierten und/oder empfangenen Phasenlagen zweier Signale aus dem ersten und den mindestens zwei ersten weiteren Signalen (S1, S1w.n) am zweiten Objekt der jeweiligen ersten Phasenbeziehung (phi1.n) zwischen diesen Signalen am ersten Objekt entspricht .

4. Verfahren nach einem der voranstehen Ansprüche, **dadurch gekennzeichnet, dass** das erste Signal (S1) und das erste weitere Signal (S1w) mittels einer ersten einzigen PLL erzeugt oder durch zwei erste PLLs, zwischen denen zum Wechseln der Frequenz umgeschaltet wird, erzeugt werden.

5. Verfahren nach einem der voranstehen Ansprüche, wobei am ersten Objekt zwischen der Abstrahlung des ersten Signals und des ersten weiteren Signals gewechselt und/oder umgeschaltet wird, insbesondere zum ersten Wechselzeitpunkt und/oder insbesondere unter Kenntnis der Phasenbeziehung zwischen erstem Signal und erstem weiteren Signal.

6. Verfahren nach einem der voranstehen Ansprüche, **dadurch gekennzeichnet, dass** zwischen dem Ende des ersten Signals (S1) und dem Beginn des ersten weiteren Signals (S1w.1) eine Zeitspanne von maximal 500 *µ*s, insbesondere maximal 300 *µ*s, insbesondere maximal 30 *µ*s, insbesondere maximal 1 *µ*s, liegt.

7. Verfahren nach einem der voranstehenden Ansprüche, **dadurch gekennzeichnet, dass** sich die erste Frequenz (f1) von der ersten weiteren Frequenz um eine erste Differenz (df1) unterscheidet, wobei die erste Differenz (df1) einen Wert von mindestens 0,02 ‰ der Frequenz des ersten oder ersten weiteren Signals und/oder von mindestens 50 kHz und/oder von maximal 5% der Frequenz des ersten oder ersten weiteren Signals und/oder von maximal 120 MHz aufweist.

8. Verfahren nach einem der voranstehenden Ansprüche, **dadurch gekennzeichnet, dass** sich die erste Frequenz (f1) von der ersten weiteren Frequenz um eine erste Differenz (df1) unterscheidet, wobei die erste Differenz (df1) einen Wert im Bereich von
100kHz multipliziert mit der durch die durchgeführte Anzahl von Abtastungen des ersten Signals (S1) oder ersten weiteren Signals (S1w.n) erreichten Phasenauflösung
bis
80MHz multipliziert mit der durch die durchgeführte Anzahl von Abtastungen des ersten Signals (S1) oder ersten weiteren Signals (S1w) erreichten Phasenauflösung
aufweist.

9. Verfahren nach einem der voranstehenden Ansprüche, wobei mindestens ein nach einem der voranstehenden Ansprüche bestimmter erster virtueller Frequenzwechselzeitpunkt zur Synchronisation des zweiten Objekts verwendet wird.

10. Verfahren nach einem der voranstehenden Ansprüche, **dadurch gekennzeichnet, dass** die erste Frequenz (f1) und die erste weitere Frequenz (f1w.n) jeweils höher sind als 1MHz.

11. Verfahren nach einem der voranstehen Ansprüche, **dadurch gekennzeichnet, dass** das Bezugssignal vor und/oder nach dem Bezugszeitpunkt (t1') gesendet wird.

12. Verfahren nach einem der voranstehenden Ansprüche, wobei nach dem ersten Signal (S1) mehrfach hintereinander ein erstes weiteres Signal (S1w) und/oder wobei mehrfach hintereinander jeweils ein erstes Signal (S1) und ein erstes weiteres Signal (S1w) abgestrahlt wird, insbesondere ohne zwischenzeitlich am ersten und/oder zweiten Objekt zwischen Senden und Empfangen zu wechseln, insbesondere umzuschalten und/oder ohne am ersten und/oder zweiten Objekt einen Verstärker um-, an- und/oder auszuschalten.

13. Verfahren nach einem der voranstehenden Ansprüche, wobei unter mehreren möglichen ersten virtuellen Frequenzwechselzeitpunkten der erste virtuelle Frequenzwechselzeitpunkt (t1) nach derselben Regel bestimmt wird, wie der erste Wechselzeitpunkt (t1') unter mehreren möglichen Wechselzeitpunkten, und/oder wobei unter mehreren möglichen ersten virtuellen Frequenzwechselzeitpunkten der oder ein mittler als der erste virtuelle Frequenzwechselzeitpunkt (t1) bestimmt wird, und unter mehreren möglichen ersten Wechselzeitpunkten der oder ein mittlerer als der erste Wechselzeitpunkt (t1') bestimmt.

## Claims

1. A method for determining a time, a distance, a transit time and/or for synchronising two time measurements, wherein a first virtual frequency change point (t1) between a first frequency (f1) of a first signal (S1) emitted by a first object and having a first phase profile, and a first further frequency (f1w.n) of a first further signal (S1w.n) emitted by the first object and having a first further phase profile, and
a reference time is used, wherein a reference signal is transmitted by a second object in such a way that it exhibits a change at the reference time,
wherein the first phase profile of the first signal (S1) exhibits a first phase relationship (phi1.1) with respect to the first further phase profile of the first further signal (S1w.n) at the first object at a first transition time (t_{U1.n} ) exhibits a first phase relationship (phi1.1), wherein the first phase relationship (phi1.1) is predetermined and/or known and/or determined,
wherein, from a phase profile of the first signal (S1) received at the second object and a phase profile of the first further signal (S1w.1) received at the second object, the first virtual frequency change time (t1) is determined as a point in time at which the phase relationship between the interpolated and/or received phase positions of the first and the first further signal (S1, S1w.1) corresponds to the first phase relationship (phi1.1), whereby at the second object a first time difference (dt1) between the first virtual frequency change time (t1.n) and the reference time (t1') is predetermined and/or known and/or is measured and/or determined, and
wherein, at the first object, a second time difference (dt2) between the first change point and the reception of the reference signal (BS) at the first object is predetermined and/or known and/or measured and/or determined, and a signal round-trip time between the first object and the second object is determined from the second time difference and the first time difference.

2. A method according to the preceding claim, **characterised in that** the reference signal is transmitted such that it begins at the reference time.

3. A method according to one of the preceding claims, wherein at least two first further signals are transmitted from the first object, and wherein two first virtual frequency switching times between the first frequency (f1) and two first further frequencies (F1w.n) are determined, wherein first phase relationships (phi1.n) exist between successive first and/or first further signals at the first object, wherein the first phase relationships (phi1.n) at the first object are predetermined and/or known and/or determined, wherein the two first virtual frequency change times (t1.n) are determined from a phase profile of the first signal (S1) received at the second object and the phase profiles of the at least two further first signals (S1w.n) received at the second object, the two first virtual frequency transition times (t1.n) are determined, each corresponding to a time at which the phase relationship between the interpolated and/or received phase positions of two signals from the first and the at least two first further signals (S1, S1w.n) at the second object corresponds to the respective first phase relationship (phi1.n) between these signals at the first object.

4. A method according to one of the preceding claims, **characterised in that** the first signal (S1) and the first further signal (S1w) are generated by means of a single first PLL or by two first PLLs, between which switching takes place to change the frequency.

5. A method according to one of the preceding claims, wherein, at the first object, a change and/or switchover is made between the transmission of the first signal and the first further signal, in particular at the first changeover point and/or in particular whilst being aware of the phase relationship between the first signal and the first further signal.

6. A method according to one of the preceding claims, **characterised in that** there is a time interval of at most 500 µs, in particular at most 300 µs, in particular at most 30 µs, in particular at most 1 µs, between the end of the first signal (S1) and the start of the first further signal (S1w.1).

7. A method according to any one of the preceding claims, **characterised in that** the first frequency (f1) differs from the first further frequency by a first difference (df1), wherein the first difference (df1) has a value of at least 0.02 % of the frequency of the first or first further signal and/or of at least 50 kHz and/or of at most 5 per cent of the frequency of the first or first further signal and/or of at most 120 MHz.

8. A method according to any one of the preceding claims, **characterised in that** the first frequency (f1) differs from the first further frequency by a first difference (df1), wherein the first difference (df1) has a value in the range of 100 kHz multiplied by the phase resolution achieved up to 80 MHz by the number of samples taken of the first signal (S1) or the first further signal (S1w.n) up to 80 MHz, multiplied by the phase resolution achieved by the number of samples taken of the first signal (S1) or the first further signal (S1w).

9. A method according to one of the preceding claims, wherein at least one first virtual frequency switching time determined in accordance with one of the preceding claims is used to synchronise the second object.

10. A method according to one of the preceding claims, **characterised in that** the first frequency (f1) and the first further frequency (f1w.n) are each higher than 1 MHz.

11. A method according to one of the preceding claims, **characterised in that** the reference signal is transmitted before and/or after the reference time (t1').

12. A method according to one of the preceding claims, wherein, following the first signal (S1), a first further signal (S1w) is transmitted several times in succession and/or wherein a first signal (S1) and a first further signal (S1w) are each transmitted several times in succession, in particular without switching between transmission and reception at the first and/or second object in the meantime, in particular without switching and/or without switching an amplifier on, off and/or between states at the first and/or second object.

13. A method according to any one of the preceding claims, wherein, from among several possible first virtual frequency-switching times, the first virtual frequency-switching time (t1) is determined according to the same rule as the first switching time (t1') from among several possible switching times, and/or wherein, from among several possible first virtual frequency switching times, the first virtual frequency switching time (t1) or a time intermediate to it is determined, and from among several possible first switching times, the first switching time (t1') or a time intermediate to it is determined.

## Revendications

1. Procédé pour déterminer un instant, une distance, un temps de propagation et/ou pour synchroniser deux mesures de temps, dans lequel un premier instant de changement de fréquence virtuel (t1) entre une première fréquence (f1) d'un premier signal (S1) émis par un premier objet et présentant une première courbe de phase, et une première autre fréquence (f1w.n) d'un premier autre signal (S1w.n) émis par le premier objet et présentant une première autre courbe de phase, et
un instant de référence est utilisé, un signal de référence étant émis par un second objet de telle sorte qu'il présente une variation à l'instant de référence,
la première courbe de phase du premier signal (S1) présentant, par rapport à la première autre courbe de phase du premier autre signal (S1w.n) au niveau du premier objet, une première relation de phase (phi1.1) à un premier instant de changement (t_{U1.n}) présente une première relation de phase (phi1.1), ladite première relation de phase (phi1.1) étant prédéterminée et/ou connue et/ou déterminée,
dans lequel, à partir d'une courbe de phase du premier signal (S1) reçu au niveau du second objet et d'une courbe de phase du premier autre signal (S1w.1) reçu au niveau du second objet, le premier instant virtuel de changement de fréquence (t1) est déterminé comme étant un instant auquel la relation de phase entre les positions de phase interpolées et/ou reçues du premier signal et du premier autre signal (S1, S1w.1) correspond à la première relation de phase (phi1.1), une première différence de temps (dt1) entre le premier instant virtuel de changement de fréquence (t1.n) et l'instant de référence (t1') étant prédéterminée et/ou connue et/ou mesurée et/ou déterminée au niveau du second objet, et
et où, au niveau du premier objet, un second écart de temps (dt2) entre le premier instant de changement de fréquence et la réception du signal de référence (BS) au niveau du premier objet est prédéterminé et/ou connu et/ou mesuré et/ou déterminé, et où, à partir du second écart de temps et du premier écart de temps, un temps de propagation du signal entre le premier objet et le second objet est déterminé.

2. Procédé selon la revendication précédente, **caractérisé en ce que** le signal de référence est émis de manière à débuter à l'instant de référence.

3. Procédé selon l'une des revendications précédentes, dans lequel au moins deux premiers signaux supplémentaires sont émis par le premier objet et dans lequel deux premiers instants de changement de fréquence virtuels sont déterminés entre la première fréquence (f1) et deux premières fréquences supplémentaires (F1w.n), des premières relations de phase (phi1.n) existant entre des premiers signaux et/ou des premiers signaux supplémentaires successifs au niveau du premier objet, les premières relations de phase (phi1.n) sur le premier objet sont prédéterminées et/ou connues et/ou déterminées, les deux premiers instants de changement de fréquence virtuels (t1.n) étant déterminés à partir d'une courbe de phase du premier signal (S1) reçu sur le second objet et des courbes de phase des au moins deux premiers signaux supplémentaires (S1w.n) reçus sur le second objet, on détermine les deux premiers instants virtuels de changement de fréquence (t1.n), chacun correspondant à un instant où la relation de phase entre les positions de phase interpolées et/ou reçues de deux signaux parmi le premier signal et lesdits au moins deux premiers signaux supplémentaires (S1, S1w.n) au niveau du second objet correspond à la première relation de phase respective (phi1.n) entre ces signaux au niveau du premier objet.

4. Procédé selon l'une des revendications précédentes, **caractérisé en ce que** le premier signal (S1) et le premier signal supplémentaire (S1w) sont générés au moyen d'une première et unique boucle à verrouillage de phase (PLL) ou par deux premières boucles à verrouillage de phase (PLL), entre lesquelles on commute pour changer de fréquence.

5. Procédé selon l'une des revendications précédentes, dans lequel, au niveau du premier objet, on alterne et/ou on commute entre l'émission du premier signal et celle du premier signal supplémentaire, en particulier au premier instant de commutation, et/ou en particulier en connaissant la relation de phase entre le premier signal et le premier signal supplémentaire.

6. Procédé selon l'une des revendications précédentes, **caractérisé en ce qu'**un intervalle de temps maximal de 500 µs, en particulier maximal de 300 µs, en particulier maximal de 30 µs, en particulier maximal de 1 µs, sépare la fin du premier signal (S1) et le début du premier signal supplémentaire (S1w.1).

7. Procédé selon l'une des revendications précédentes, **caractérisé en ce que** la première fréquence (f1) diffère de la première autre fréquence d'une première différence (df1), la première différence (df1) a une valeur d'au moins 0,02 % de la fréquence du premier signal ou du premier autre signal et/ou d'au moins 50 kHz et/ou d'au plus 5 % de la fréquence du premier signal ou du premier autre signal et/ou d'au plus 120 MHz.

8. Procédé selon l'une des revendications précédentes, **caractérisé en ce que** la première fréquence (f1) diffère de la première autre fréquence d'une première différence (df1), la première différence (df1) ayant une valeur comprise dans la plage allant de 100 kHz multipliée par la résolution de phase atteinte par le nombre d'échantillonnages effectués du premier signal (S1) ou du premier autre signal (S1w.n) jusqu'à 80 MHz, multipliée par la résolution de phase obtenue grâce au nombre d'échantillonnages effectués du premier signal (S1) ou du premier signal supplémentaire (S1w).

9. Procédé selon l'une des revendications précédentes, dans lequel au moins un premier instant de changement de fréquence virtuel, déterminé selon l'une des revendications précédentes, est utilisé pour la synchronisation du second objet.

10. Procédé selon l'une des revendications précédentes, **caractérisé en ce que** la première fréquence (f1) et la première autre fréquence (f1w.n) sont chacune supérieures à 1 MHz.

11. Procédé selon l'une des revendications précédentes, **caractérisé en ce que** le signal de référence est émis avant et/ou après l'instant de référence (t1').

12. Procédé selon l'une des revendications précédentes, dans lequel, après le premier signal (S1), un premier signal supplémentaire (S1w) est émis plusieurs fois de suite et/ou dans lequel un premier signal (S1) et un premier signal supplémentaire (S1w) sont émis plusieurs fois de suite, en particulier sans basculer entre-temps entre l'émission et la réception sur le premier et/ou le second objet, en particulier sans commutation et/ou sans activer, désactiver et/ou mettre en marche un amplificateur sur le premier et/ou le second objet.

13. Procédé selon l'une des revendications précédentes, dans lequel, parmi plusieurs premiers instants de changement de fréquence virtuels possibles, le premier instant de changement de fréquence virtuel (t1) est déterminé selon la même règle que le premier instant de changement (t1') parmi plusieurs instants de changement possibles, et/ou dans lequel, parmi plusieurs premiers instants de changement de fréquence virtuels possibles, on détermine le premier ou un instant de changement de fréquence virtuel (t1) plus tardif que le premier instant de changement de fréquence virtuel (t1), et parmi plusieurs premiers instants de changement possibles, on détermine le premier ou un instant de changement (t1') plus tardif que le premier instant de changement.
